# EUROPEAN PATENT APPLICATION

(11) **EP 3 909 960 A1**
(43) Date of publication of application: **17.11.2021**
(21) Application number: 21171128.8
(22) Date of filing: 29.04.2021
(51) Int. Cl.: C07F 7/12

(54) **PROCESS FOR PRODUCING DIMETHYLCHLOROSILANE COMPOUND**

(30) Priority: 13.05.2020 JP 2020084262
(71) Applicant: Shin-Etsu Chemical Co., Ltd., Tokyo (JP)
(72) Inventor: AOKI, Shotaro, Joetsu-shi, Niigata-ken (JP); TONOMURA, Yoichi, Joetsu-shi, Niigata-ken (JP); KIYOMORI, Ayumu, Joetsu-shi, Niigata-ken (JP)
(74) Representative: Ter Meer Steinmeister & Partner

(57) **Abstract**

A process for producing a dimethylchlorosilane compound of formula (2) below: 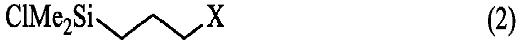 wherein X represents a halogen atom or an acyloxy group having 2 to 20 carbon atoms,
the process including the step of:
reacting an allyl compound of formula (1) below: 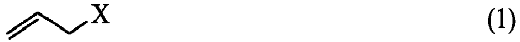 wherein X has a meaning same as above,
with dimethylchlorosilane in presence of an iridium catalyst,
wherein the dimethylchlorosilane has a content of 1,1,3,3-tetramethyldisiloxane of 5.0 wt% or less.

## Description

### CROSS-REFERENCE TO RELATED APPLICATION

This non-provisional application claims priority under 35 U.S.C. §119(a) on Patent Application No. 2020-084262 filed in Japan on May 13, 2020, the entire contents of which are hereby incorporated by reference.

### TECHNICAL FIELD

The present invention relates to a process for producing a dimethylchlorosilane compound.

### BACKGROUND ART

Dimethylchlorosilane compounds such as 3-halopropyldimethylchlorosilane and 3-acyloxypropyldimethylchlorosilane are conventionally used as synthetic intermediates for various silane coupling agents or as modification materials for silicone oils.

For example, 3-halopropyldimethylchlorosilane has a halogen atom having a high leaving group ability at the 3-position of the propyl group, can be changed to various silane coupling agents by reaction with nucleophiles, and thus is useful. If 3-halopropyldimethylchlorosilane is used as a capping agent at the end of silicone oil, a 3-halopropyl group can be introduced at the end of a silicone oil. The introduced 3-halopropyl group and a nucleophile can be reacted to produce various end-modified silicone oils.

Meanwhile, if 3-methacryloxypropyldimethylchlorosilane, which is one of 3-acyloxypropyldimethylchlorosilanes, is used as a capping agent at the end of a silicone oil, a silicone oil having a polymerizable functional group can be obtained. Further, 3-methacryloxypropyldimethylchlorosilane can also be used as a polymerizable monomer for obtaining a silicon-containing polymer.

As a process for producing these 3-halopropylchlorosilane compound and 3-acyloxypropylchlorosilane compound, a process in which an iridium catalyst is used has been described (Patent Documents 1 to 3).

According to the processes for production of Patent Documents 1 to 3, by-products of propene derived from the raw material allyl compound and by-products of positional isomers if a platinum catalyst is used can be suppressed, and 3-halopropyldimethylchlorosilane and 3-acyloxypropyldimethylchlorosilane can be obtained with high selectivity and a good yield.

It is also known that an iridium catalyst can be used for the hydrosilylation reaction between allyl methacrylate and hydrosiloxane to give the corresponding siloxane compound with a good yield (Non-Patent Document 1).

### Citation List

Patent Document 1: JP-A H07-126271
Patent Document 2: JP-A 2001-322993
Patent Document 3: JP-A 2003-096086
Non-Patent Document 1: M. Walczak, A. Franczyk, M. Dutkiewicz, B. Marciniec, Organometallics 2019, 38, 3018-3024.

### SUMMARY OF THE INVENTION

However, in the processes for producing 3-halopropyldimethylchlorosilane and 3-acyloxypropyldimethylchlorosilane using an iridium catalyst disclosed in Patent Documents 1 to 3, the reproducibility of the reaction is poor, and the catalyst may be inactivated. As a result, the hydrosilylation reaction is stopped in the middle, thus the yield is low, and stable production of the desired product is difficult.

The present invention has been made in view of the above-mentioned circumstances. It is an object of the present invention to provide a process for stably and efficiently producing 3-halopropyldimethylchlorosilane and 3-acyloxypropyldimethylchlorosilane, which are dimethylchlorosilane compounds, in a high yield.

To solve the above-mentioned problems, the present inventors intensively studied on factors that inhibit the desired reaction in the production of dimethylchlorosilane compounds in which an iridium catalyst is used from the viewpoint of impurities in the raw materials, and as a result, have found that 1,1,3,3-tetramethyldisiloxane, a type of hydrosiloxanes, which originally do not inhibit the hydrosilylation reaction, inhibits the hydrosilylation reaction between the allyl compound and the dimethylchlorosilane.

1,1,3,3-Tetramethyldisiloxane is produced by the reaction of the raw material dimethylchlorosilane with water and resulting hydrolysis condensation reaction. It is known that this 1,1,3,3-tetramethyldisiloxane reacts with an olefin compound in the presence of a metal catalyst such as platinum to give the corresponding tetramethyldisiloxane compound, and it is used in various hydrosilylation reactions. Originally, 1,1,3,3-tetramethyldisiloxane can be a reaction substrate in the hydrosilylation reaction, and thus dose not reduce the activity of the catalyst used in the hydrosilylation reaction.

However, it was found that 1,1,3,3-tetramethyldisiloxane acts as a reaction inhibitor of the hydrosilylation reaction in the hydrosilylation reaction between an allyl compound such as allyl halide and allyl carboxylate and dimethylchlorosilane in which an iridium catalyst is used.

Based on this finding, the present inventors have found that by reducing the content of 1,1,3,3-tetramethyldisiloxane in the raw material dimethylchlorosilane, or by using a dimethylchlorosilane having a low content of 1,1,3,3-tetramethyldisiloxane, the hydrosilylation reaction with the an allyl compound is promoted, and 3-halopropyldimethylchlorosilane and 3-acyloxypropyldimethylchlorosilane, which are dimethylchlorosilane compounds, can be produced stably, efficiently and in a high yield, thereby completing the present invention.

That is, the present invention provides the following:
1. A process for producing a dimethylchlorosilane compound of formula (2) below: 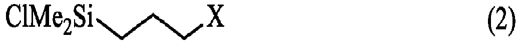 wherein X represents a halogen atom or an acyloxy group having 2 to 20 carbon atoms, the process including the step of:
   reacting an allyl compound of formula (1) below: 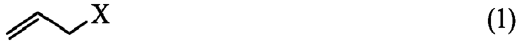 wherein X has a meaning same as above,
   with dimethylchlorosilane in presence of an iridium catalyst,
   wherein the dimethylchlorosilane has a content of 1,1,3,3-tetramethyldisiloxane of 5.0 wt% or less.
2. The process for producing a dimethylchlorosilane compound according to item 1, wherein the reaction is performed in presence of an olefin compound of formula (3) below: 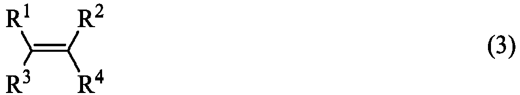 wherein R¹ and R² each independently represent a monovalent hydrocarbon group having 1 to 10 carbon atoms, and optionally bond together to form a ring, and R³ and R⁴ each independently represent a hydrogen atom or a monovalent hydrocarbon group having 1 to 10 carbon atoms,
   in addition to the iridium catalyst.
3. A process for promoting a hydrosilylation reaction when a dimethylchlorosilane compound of formula (2) below: 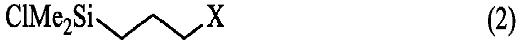 wherein X represents a halogen atom or an acyloxy group having 2 to 20 carbon atoms,
   is produced by hydrosilylating an allyl compound of formula (1) below: 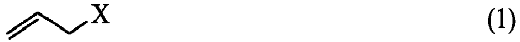 wherein X has a meaning same as above,
   with dimethylchlorosilane in presence of an iridium catalyst,
   which uses the dimethylchlorosilane having a content of 1,1,3,3-tetramethyldisiloxane reduced to 5.0 wt% or less.
4. The process for promoting a hydrosilylation reaction according to item 3,
   wherein the hydrosilylation reaction is further performed in presence of an olefin compound of formula (3) below: 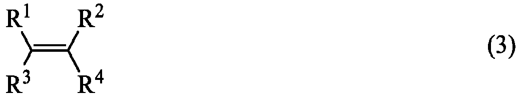 wherein R¹ and R² each independently represent a monovalent hydrocarbon group having 1 to 10 carbon atoms, and optionally bond together to form a ring, and R³ and R⁴ each independently represent a hydrogen atom or a monovalent hydrocarbon group having 1 to 10 carbon atoms,
   in addition to the iridium catalyst.

### ADVANTAGEOUS EFFECTS OF THE INVENTION

According to the present invention, 3-halopropyldimethylchlorosilane and 3-acyloxypropyldimethylchlorosilane, which are useful as synthetic intermediates for various silane coupling agents or as modifying materials for silicone oils, can be produced stably, efficiently, and in a high yield.

### DESCRIPTION OF THE PREFERRED EMBODIMENT

Hereinafter, the present invention is specifically described.

In the process for producing a dimethylchlorosilane compound of the present invention,
in a process for producing a dimethylchlorosilane compound of formula (2) below: 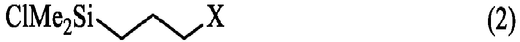 including the step of:
reacting an allyl compound of formula (1) below: 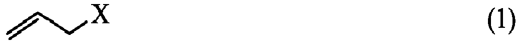 with dimethylchlorosilane in presence of an iridium catalyst,
the dimethylchlorosilane has a content of 1,1,3,3-tetramethyldisiloxane of 5.0 wt% or less.

In formulas above, X represents a halogen atom or an acyloxy group having 2 to 20 carbon atoms, preferably having 2 to 10 carbon atoms, and more preferably having 2 to 6 carbon atoms.

Examples of the halogen atom include a chlorine atom, a bromine atom, and an iodine atom.

Specific examples of the acyloxy group having 2 to 20 carbon atoms include linear saturated acyloxy groups such as an acetoxy group, an n-propionoxy group, an n-butyroxy group, an n-pentanoxy group, an n-hexanoxy group, an n-octanoxy group, and an n-nonanoxyl group;
branched saturated acyloxy groups such as an isopropoxy group, an isobutyroxy group, a 2-methylbutyroxy group, a 3-methylbutyroxy group, a 2,2-dimethylbutyroxy group, a 2-ethylbutyroxy group, a 2-methylpentanoxy group, a 3-methylpentanoxy group, and a 4-methylpentanoxy group; linear unsaturated acyloxy groups such as
an acyloxy group, a crotonoxy group, a 2-penthenoxy group, a 4-penthenoxy group, a 2,4-hexadienoxy group, a 2-hexenoxy, a 3-hexenoxy, a 5-hexenoxy group, a 2,6-heptadinoxy group, and a 2-octenoxy groups; branched unsaturated acyloxy groups such as an amethacryloxy group, an α-methylcrotonoxy group, and a 2-methyl-2-pentenoxy group; and aromatic substituent-containing acyloxy groups such as a benzoxy group, a 3-phenylacyloxy group, a 3-vinylbenzoxy group, a 4-vinylbenzoxy group, a 2,3-dimethylbenzoxy group, a 2,4-dimethylbenzoxy group, a 2,5-dimethylbenzoxy group, a 2,6-didimethylbenzoxy group, a 3,4-dimethylbenzoxy group, a 3,5-dimethylbenzoxy group, a 4-ethylbenzoxy group, a 3-(4-hydroxyphenyl)acyloxy group, a 2-phenylpropionoxy group, a 2-methyl-3-phenylacyloxy group, a 3-(2-methylphenyl)acyloxy group, a 3-(3-methylphenyl)acyloxy group, a 3-(4-methylphenyl)acyloxy group, and a 4-isopropylbenzoxy group.

Among these, an acetoxy group, an acyloxy group, and a methacrylox group are preferable as the acyloxy group having 2 to 20 carbon atoms from the viewpoint of raw material availability.

Specific examples of the allyl compound of formula (1) above include allyl chloride, allyl bromide, allyl iodide, allyl acetate, allyl acrylate, allyl n-propionate, allyl methacrylate, allyl crotonate, allyl vinyl acetate, allyl n-butyrate, allyl isobutyrate, allyl 2-pentene, allyl 4-pentene, allyl α-methylcrotonate, allyl 2-methylbutanoate, allyl isovalerate, allyl valerate, allyl 2,4-hexadienoate, allyl 2-hexenoate, allyl 3-hexenoate, allyl 5-hexenoate, allyl 2-methyl-2-penteneate, allyl 2,2-dimethylbutyrate, allyl 2-ethylbutyrate, allyl hexanoate, allyl 2-methylpentanoate, allyl 3-methylpentanoate, allyl 4-methylpentanoate, allyl benzoate, allyl 2,6-heptadiente, allyl 2-octene, allyl octanate, allyl cinnamate, allyl 3-vinylbenzoate, allyl 4-vinylbenzoate, allyl 2,3-dimethylbenzoate, allyl 2,4-dimethylbenzoate, allyl 2,5-dimethylbenzoate, allyl 2,6-dimethylbenzoate, allyl 3,4-dimethylbenzoate, allyl 3,5-dimethylbenzoate, allyl 4-ethylbenzoate, allyl hydrocitrate, allyl 2-phenylpropionate, allyl nonanoate, allyl α-methylcitrate, allyl 2-methylcitnamate, allyl 3-methylcitnamate, allyl 4-methylcitnamate, and allyl 4-isopropylbenzoate.

Among these, allyl chloride, allyl bromide, allyl iodide, allyl acetate, allyl acrylate, and allyl methacrylate are preferable from the viewpoint of raw material availability.

In the above-mentioned reaction, though the amount of the allyl compound of formula (1) used is not particularly limited, it is preferably 0.5 to 2.0 mol, and more preferably 0.9 to 1.5 mol per mol of dimethylchlorosilane from the viewpoint of reducing the amount of the raw material dimethylchlorosilane remained after completion of the reaction.

As described above, in the present invention, the raw material dimethylchlorosilane used has a content of 1,1,3,3-tetramethyldisiloxane, which acts as a reaction inhibitor of the hydrosilylation reaction, of 5.0 wt% or less, preferably has a content of 1,1,3,3-tetramethyldisiloxane of 4.5 wt% or less, more preferably has a content of 1,1,3,3-tetramethyldisiloxane of 4.0 wt% or less, even more preferably has a content of 1,1,3,3-tetramethyldisiloxane of 3.0 wt% or less, further preferably has a content of 1,1,3,3-tetramethyldisiloxane of 2.0 wt% or less, and most preferably has a content of 1,1,3,3-tetramethyldisiloxane of 1.0 wt% or less. For the reasons described above, the dimethylchlorosilane is preferably free of 1,1,3,3-tetramethyldisiloxane if possible, and the lower limit of the content is 0 wt%.

1,1,3,3-Tetramethyldisiloxane contained in the raw material dimethylchlorosilane can be reduced by a known purification method such as separation by distillation. However, because the boiling points of dimethylchlorosilane and 1,1,3,3-tetramethyldisiloxane are close to each other, in distillation purification, a distillation column having high separability and filled with a packing for precision distillation such as Raschig Ring, Pall Ring, McMahon Packing, and Dixon Packing is preferably used.

1,1,3,3-Tetramethyldisiloxane contained in dimethylchlorosilane can also be reduced by increasing the reflux ratio (ratio of the reflux amount to the distillation amount) at the time of distillation. For example, the reflux ratio can be preferably 1 or more, and more preferably 2 or more.

The iridium catalyst used in the present invention is an iridium salt or an iridium complex of formula (4) below.

[Ir(R⁵)Y]₂ (4)

In formula (4) above, R⁵ is a diene compound having 4 to 20 carbon atoms, and preferably having 4 to 10 carbon atoms.

Specific examples of the diene compound include chain diene compounds such as 1,3-butadiene, 2-methyl-1,3-butadiene, 1,3-pentadiene, and 1,4-pentadiene; and cyclic diene compounds such as cyclopentadiene, pentamethylcyclopentadiene, 1,3-cyclohexadiene, 1,4-cyclohexadiene, 1,5-cyclooctadiene, and 2,5-norbornadiene.

Y is a chlorine atom, a bromine atom, or an iodine atom.

Specific examples of the iridium catalyst include iridium salts such as iridium trichloride, iridium tetrachloride, iridium chloride, sodium iridium chloride, and potassium iridium chloride; and iridium complexes such as di-µ-chlorobis(µ-1,5-hexadiene)diiridium, di-µ-bromobis(µ-1,5-hexadiene)diiridium, di-µ-iodobis(µ-1,5-hexadiene)diiridium, di-µ-chlorobis(µ-1,5-cyclooctadiene)diiridium, di-µ-bromobis(µ-1,5-cyclooctadiene)diiridium, di-µ-iodobis(µ-1,5-cyclooctadiene)diiridium, di-µ-chlorobis(µ-2,5-norbornadiene)diiridium, di-µ-bromobis(µ-2,5-norbornadiene)diiridium, di-µ-iodobis(µ-2,5-norbornadiene)diiridium, di-µ-methoxybis(µ-1,5-cyclooctadiene)diiridium, and di-µ-chlorobis(µ-pentamethylcyclopentadiene) diiridium, and these can be used alone or in combination of two or more.

Among these, di-µ-chlorobis(µ-1,5-cyclooctadiene)diiridium is preferable from the viewpoint of exhibition of sufficient catalytic activity with a small amount used.

Though the amount of the iridium catalyst used is not particularly limited, the iridium atom is preferably 0.000001 to 0.01 mol, more preferably 0.00001 to 0.001 mol per mol of the raw material dimethylchlorosilane from the viewpoint of maintaining sufficient catalytic activity.

In the present invention, various additives can be added in addition to the iridium catalyst, if necessary.

Examples of the additives include an olefin compound of formula (3) below, and an alcohol compound of formula (5) below, and a polymerization inhibitor.

From the viewpoint of stabilizing the iridium catalyst, at least an olefin compound is preferably used.

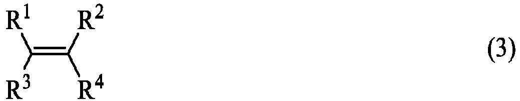

R⁶OH (5)

In formula (3) above, R¹ and R² are each independently a monovalent hydrocarbon group having 1 to 10 carbon atoms, preferably having 1 to 8 carbon atoms, and more preferably having 1 to 6 carbon atoms, and these optionally bond together to form a ring.

Specific examples of the monovalent hydrocarbon group having 1 to 10 carbon atoms include linear alkyl groups such as a methyl group, an ethyl group, an n-propyl group, an n-butyl group, an n-pentyl group, an n-hexyl group, an n-heptyl group, an n-octyl group, an n-decyl, and an n-icosyl group; branched alkyl groups such as an isopropyl group, an isobutyl group, a sec-butyl group, a tert-butyl group, a texyl group, and a 2-ethylhexyl group; and alkenyl groups such as a vinyl group, an allyl group, a 1-propenyl group, a 1-butenyl group, a 2-butenyl group, a 3-butenyl group, a 1-methyl-3-butenyl group, a 2-methyl-3-butenyl group, a 3-methyl-3-butenyl group, a 1-pentenyl group, a 2-pentenyl group, a 3-pentenyl group, a 4-pentenyl group, a 1-hexenyl group, a 2-hexenyl group, a 3-hexenyl group, a 4-hexenyl group, and a 5-hexenyl group, and from the viewpoint of raw material availability, a methyl group, an ethyl group, an n-propyl group, an isopropyl group, an n-butyl group, an isobutyl group, a sec-butyl group, a tert-butyl group, a vinyl group, an allyl group, and a 3-butenyl group are preferable.

R³ and R⁴ are each independently a hydrogen atom or a monovalent hydrocarbon group having 1 to 10 carbon atoms, preferably having 1 to 8 carbon atoms, and more preferably having 1 to 6 carbon atoms, and specific examples of the monovalent hydrocarbon group having 1 to 10 carbon atoms include substituents same as those of R¹ and R².

Specific examples of the olefin compound of formula (3) above include chain olefin compounds such as 2-hexene, 3-hexene, 2-heptene, 2-octene, 4-octene, 2-decene, and 5-decene; and cyclic olefin compounds such as cyclopentene, cyclohexene, 2-norbornene, 1,3-cyclohexadiene, 1,4-cyclohexadiene, 4-vinyl-1-cyclohexene, 1,5-cyclooctadiene, 2,5-norbornadiene, 5-vinyl-2-norbornene, and limonene, and these can be used alone or in combination of two or more.

Among these, 1,5-cyclooctadiene is preferable from the viewpoint of reactivity and stability of the catalyst.

Though the amount of the olefin compound of formula (3) above used is not particularly limited, it is preferably 0.5 to 10,000 mol, and more preferably 1 to 1,000 mol per mol of the iridium atom of the iridium catalyst.

In formula (5) above, R⁶ is a monovalent hydrocarbon group having 1 to 20 carbon atoms, preferably having 1 to 10 carbon atoms, and more preferably having 1 to 5 carbon atoms.

Specific examples of the monovalent hydrocarbon group having 1 to 20 carbon atoms include linear alkyl groups such as a methyl group, an ethyl group, an n-propyl group, an n-butyl group, an n-pentyl group, an n-hexyl group, an n-heptyl group, an n-octyl group, an n-decyl group, and an n-icosyl group; branched alkyl groups such as an isopropyl group, an isobutyl group, a sec-butyl group, a tert-butyl group, a texyl group, and a 2-ethylhexyl group; cyclic alkyl groups such as a cyclopentyl group and a cyclohexyl group; alkenyl groups such as a vinyl group, an allyl group, and a 1-propenyl group; alkynyl groups such as an ethynyl group, a 1-propynyl group, and a 2-propynyl group, and aralkyl groups such as a benzyl group.

A part or all of the hydrogen atoms of the monovalent hydrocarbon group can be substituted with other substituents, and specific examples thereof include substituted monovalent hydrocarbon groups such as those substituted with a hydroxy group or an alkoxy group, and those containing an ether bond and a carbonyl group.

Specific examples of the alcohol compound of formula (5) above include monohydric alcohols such as methanol, ethanol, 1-propanol, 2-propanol, 1-butanol, 2-butanol, 2-methyl-1-propanol, 2-methyl-2-propanol, 1-pentanol, 2-pentanol, 2-methyl-1-butanol, tert-amyl alcohol, 1-hexanol, 4-methyl-2-pentanol, 1-octanol, 2-ethyl-1-hexanol, 1-decanol, cyclohexanol, methylcyclohexanol, menthol, allyl alcohol, propargyl alcohol, ethylene glycol monomethyl ether, ethylene glycol monoethyl ether, diethylene glycol monomethyl ether, diethylene glycol monoethyl ether, benzyl alcohol, and phenethyl alcohol; and polyhydric alcohols such as ethylene glycol, propylene glycol, and glycerin, and these can be used alone or in combination of two or more.

Among these, methanol, ethanol, and 2-ethyl-1-hexanol are preferable from the viewpoint of reactivity and stability of the catalyst.

Though the amount of the alcohol compound of formula (5) above used is not particularly limited, it is preferably 1 to 100,000 mol, and more preferably 5 to 10,000 mol per mol of the iridium atom of the iridium catalyst.

Specific examples of the polymerization inhibitor include phenol compounds such as hydroquinone and hydroquinone monomethyl ether; and hindered phenol compounds such as 2,2'-methylenebis(4-methyl-6-tert-butylphenol), 2,2'-methylenebis(4-ethyl-6-tert-butylphenol), 4,4'-butylidenebis(6-tert-m-cresol), 1,3,5-trimethyl-2,4,6-tris(3,5-di-tert-butyl-4-hydroxybenzyl)benzene, tris(3,5-di-tert-butyl-4-hydroxybenzyl)isocyanurate, 2,6-di-tert-butyl-4-methylphenol, 2,6-di-tert-butyl-4-hydroxymethylphenol, 2-tert-butyl-6-(3-tert-butyl-2-hydroxy-5-methylbenzyl)-4-methylphenylacrylate, and tert-butylcatechol, and these can be used alone or in combination of two or more.

Among these, 2,6-di-tert-butyl-4-methylphenol in a phenol compound is preferable from the viewpoint of sufficiently stabilizing the reaction by addition of a small amount.

Though the amount of the polymerization inhibitor used is not particularly limited, it is preferably 0.0001 to 20 wt%, and more preferably 0.001 to 10 wt% per the weight of the allyl compound of formula (1) above from the viewpoint of stabilizing the reaction.

In the present invention, though the reaction pressure during the hydrosilylation reaction is not particularly limited, normal pressure is preferable from the viewpoint of safety during production.

Though the reaction temperature is not particularly limited, it is preferably 0 to 200°C, and more preferably 0 to 100°C from the viewpoint of safety during production.

Though the reaction time is also not particularly limited, it is preferably 1 to 24 hours, and more preferably 1 to 12 hours from the viewpoint of production efficiency.

The reaction atmosphere is preferably an atmosphere of an inert gas such as nitrogen and argon from the viewpoint of safety during production.

Though the hydrosilylation reaction proceeds without a solvent, a solvent can be used.

Examples of the solvent used include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as acetonitrile, N,N-dimethylformamide, and N-methylpyrrolidone; and chlorinated hydrocarbon solvents such as dichloromethane and chloroform. These solvents can be used alone or in combination of two or more.

3-Halopropyldimethylchlorosilane or 3-methacryloxypropyldimethylchlorosilane obtained by the hydrosilylation reaction can be isolated according to a conventional method such as distillation, and can be further purified and used by methods such as separation by rectification and separation by an adsorbent such as activated carbon, if necessary.

### EXAMPLES

Hereinafter, though the present invention is more specifically described by way of Examples and Comparative Examples, the present invention is not limited to Examples below.

### Example 1

The inside of a four-necked flask with a stirrer, a refluxer, a dropping funnel, and a thermometer was replaced with nitrogen, and 42.1 g (550.0 mmol) of allyl chloride, 8.4 mg (1.2 × 10⁻² mmol) of di-µ-chlorobis(µ-1,5-cyclooctadiene)diiridium, and 270 mg (2.5 mmol) of 1,5-cyclooctadiene were placed and stirred at 25 °C while flowing nitrogen gas through the open end of the upper part of the reflux condenser to prevent outside air from entering. While adjusting the temperature so that the internal temperature would be 25 to 30°C, 47.3 g of dimethylchlorosilane having a content of 1,1,3,3-tetramethyldisiloxane of 0.2 wt% (amount of substance of dimethylchlorosilane: 500.0 mmol) was added dropwise, and the mixture was stirred at 25°C for 4 hours. The obtained reaction liquid was analyzed by gas chromatography, and the rate of reaction was found to be 99.2%. The reaction liquid was distilled to obtain 78.8 g of 3-chloropropyldimethylchlorosilane as a fraction of a boiling point of 82°C/4.2 kPa (yield: 92.1%).

### Example 2

The reaction was performed in the same manner as in Example 1 except that 47.3 g of dimethylchlorosilane having a content of 1,1,3,3-tetramethyldisiloxane of 0.2 wt% was changed to 47.6 g of dimethylchlorosilane having a content of 1,1,3,3-tetramethyldisiloxane of 0.7 wt% (amount of substance of dimethylchlorosilane: 500.0 mmol), the obtained reaction liquid was analyzed by gas chromatography, and the rate of reaction was found to be 93.0%. The reaction liquid was distilled to obtain 73.9 g of 3-chloropropyldimethylchlorosilane as a fraction of a boiling point of 82 °C/4.2 kPa (yield: 86.4%).

### Example 3

The reaction was performed in the same manner as in Example 1 except that 47.3 g of dimethylchlorosilane having a content of 1,1,3,3-tetramethyldisiloxane of 0.2 wt% was changed to 48.0 g of dimethylchlorosilane having a content of 1,1,3,3-tetramethyldisiloxane of 1.4 wt% (amount of substance of dimethylchlorosilane: 500.0 mmol), the obtained reaction liquid was analyzed by gas chromatography, and the rate of reaction was found to be 89.7%. The reaction liquid was distilled to obtain 71.2 g of 3-chloropropyldimethylchlorosilane as a fraction of a boiling point of 82 °C/4.2 kPa (yield: 83.3%).

### Example 4

The reaction was performed in the same manner as in Example 1 except that 47.3 g of dimethylchlorosilane having a content of 1,1,3,3-tetramethyldisiloxane of 0.2 wt% was changed to 37.0 g of dimethylchlorosilane having a content of 1,1,3,3-tetramethyldisiloxane of 4.0 wt% (amount of substance of dimethylchlorosilane: 375.0 mmol), the obtained reaction liquid was analyzed by gas chromatography, and the rate of reaction was found to be 63.3%. The reaction liquid was distilled to obtain 50.2 g of 3-chloropropyldimethylchlorosilane as a fraction of a boiling point of 82 °C/4.2 kPa (yield: 58.8%).

### Example 5

The inside of a four-necked flask with a stirrer, a refluxer, a dropping funnel, and a thermometer was replaced with nitrogen, and 126.2 g (1000.0 mmol) of allyl methacrylate, 16.8 mg (2.5 × 10⁻² mmol) of di-µ-chlorobis(µ-1,5-cyclooctadiene)diiridium, 960 mg (8.9 mmol) of 1,5-cyclooctadiene, and 330 mg (1.5 mmol) of 2,6-di-tert-butyl-4-methylphenol were placed and stirred at 60 °C while flowing nitrogen gas through the open end of the upper part of the reflux condenser to prevent outside air from entering. While adjusting the temperature so that the internal temperature would be 60 to 70°C, 94.6 g of dimethylchlorosilane having a content of 1,1,3,3-tetramethyldisiloxane of 0.2 wt% (amount of substance of dimethylchlorosilane: 1000.0 mmol) was added dropwise, and the mixture was stirred at 60 °C for 1 hour. The obtained reaction liquid was analyzed by gas chromatography, and the rate of reaction was found to be 99.2%. The reaction liquid was distilled to obtain 189.0 g of 3-methacryloxypropyldimethylchlorosilane as a fraction of a boiling point of 93 °C/0.5 kPa (yield: 85.6%).

### Comparative Example 1

The reaction was performed in the same manner as in Example 1 except that 47.3 g of dimethylchlorosilane having a content of 1,1,3,3-tetramethyldisiloxane of 0.2 wt% was changed to 50.6 g of dimethylchlorosilane having a content of 1,1,3,3-tetramethyldisiloxane of 6.7 wt% (amount of substance of dimethylchlorosilane: 500.0 mmol), the obtained reaction liquid was analyzed by gas chromatography, and the rate of reaction was found to be 50.0% or less. The reaction liquid was distilled to obtain 35.2 g of 3-chloropropyldimethylchlorosilane as a fraction of a boiling point of 82 °C/4.2 kPa (yield: 41.2%).

### Comparative Example 2

The reaction was performed in the same manner as in Example 5 except that 94.6 g of dimethylchlorosilane having a content of 1,1,3,3-tetramethyldisiloxane of 0.2 wt% was changed to 101.2 g of dimethylchlorosilane having a content of 1,1,3,3-tetramethyldisiloxane of 6.7 wt% (amount of substance of dimethylchlorosilane: 1000.0 mmol), the obtained reaction liquid was analyzed by gas chromatography, and the rate of reaction was found to be 50.0% or less. The reaction liquid was distilled to obtain 81.3 g of 3-methacryloxypropyldimethylchlorosilane as a fraction of a boiling point of 93 °C/0.5 kPa (yield: 36.8%).

As described above, in the hydrosilylation reaction between the allyl compound of formula (1) above and dimethylchlorosilane, when dimethylchlorosilane having a content of 1,1,3,3-tetramethyldisiloxane of more than 5.0 wt% was used, the rate of reaction was below 50.0%, an extremely low value. If the rate of reaction is low, the yield decreases and the productivity deteriorates. Though unreacted raw materials can be recovered, recovery of raw materials is not desirable because it leads to complicated production process and increase of the production cost.

Meanwhile, in the hydrosilylation reaction between the allyl compound of formula (1) above and dimethylchlorosilane, when dimethylchlorosilane having a content of 1,1,3,3-tetramethyldisiloxane of 5.0 wt% or less was used, the rate of reaction was significantly improved. Thus, in such a case, 3-halopropyldimethylchlorosilane and 3-acyloxypropyldimethylchlorosilane can be produced stably and efficiently.

Japanese Patent Application No. 2020-084262 is incorporated herein by reference.

Although some preferred embodiments have been described, many modifications and variations may be made thereto in light of the above teachings. It is therefore to be understood that the invention may be practiced otherwise than as specifically described without departing from the scope of the appended claims.

## Claims

1. A process for producing a dimethylchlorosilane compound of formula (2) below: 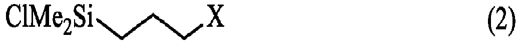 wherein X represents a halogen atom or an acyloxy group having 2 to 20 carbon atoms, the process comprising the step of:
reacting an allyl compound of formula (1) below: 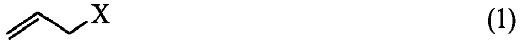 wherein X has a meaning same as above,
with dimethylchlorosilane in presence of an iridium catalyst,
wherein the dimethylchlorosilane has a content of 1,1,3,3-tetramethyldisiloxane of 5.0 wt% or less.

2. The process for producing a dimethylchlorosilane compound according to claim 1, wherein the reaction is performed in presence of an olefin compound of formula (3) below: 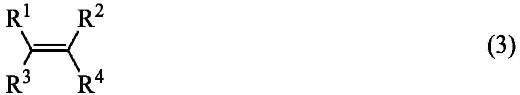 wherein R¹ and R² each independently represent a monovalent hydrocarbon group having 1 to 10 carbon atoms, and optionally bond together to form a ring, and R³ and R⁴ each independently represent a hydrogen atom or a monovalent hydrocarbon group having 1 to 10 carbon atoms,
in addition to the iridium catalyst.

3. A process for promoting a hydrosilylation reaction when a dimethylchlorosilane compound of formula (2) below: 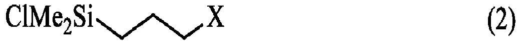 wherein X represents a halogen atom or an acyloxy group having 2 to 20 carbon atoms,
is produced by hydrosilylating an allyl compound of formula (1) below: 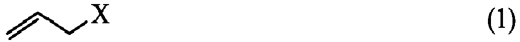 wherein X has a meaning same as above,
with dimethylchlorosilane in presence of an iridium catalyst,
which uses the dimethylchlorosilane having a content of 1,1,3,3-tetramethyldisiloxane reduced to 5.0 wt% or less.

4. The process for promoting a hydrosilylation reaction according to claim 3,
wherein the hydrosilylation reaction is further performed in presence of an olefin compound of formula (3) below: 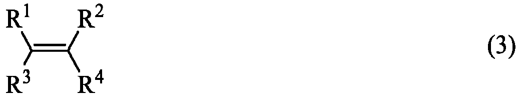 wherein R¹ and R² each independently represent a monovalent hydrocarbon group having 1 to 10 carbon atoms, and optionally bond together to form a ring, and R³ and R⁴ each independently represent a hydrogen atom or a monovalent hydrocarbon group having 1 to 10 carbon atoms,
in addition to the iridium catalyst.
